# EUROPÄISCHE PATENTANMELDUNG

(11) **EP 3 546 311 A1**
(43) Veröffentlichungstag der Anmeldung: **02.10.2019**
(21) Anmeldenummer: 19160236.6
(22) Anmeldetag: 01.03.2019
(51) Int. Cl.: B60W 30/18, B60W 20/15, B60K 6/383, B60K 6/48

(54) **STEUERUNGSVERFAHREN FÜR EINEN ANTRIEBSSTRANG MIT MINDESTENS EINEM FREILAUFGESCHALTETEN GETRIEBEGANG**

(30) Priorität: 29.03.2018 DE 102018204844
(71) Anmelder: VOLKSWAGEN AKTIENGESELLSCHAFT, 38440 Wolfsburg (DE)
(72) Erfinder: Schaefer, Stephan, 38458 Velpke (DE)

(57) **Zusammenfassung**

Die Erfindung betrifft ein Verfahren zur Steuerung eines Antriebsstrangs eines Kraftfahrzeugs, beispielsweise eines Hybridkraftfahrzeugs, mit mindestens einem Motor, mit einem von dem Motor über eine Motorwelle antreibbaren Getriebe und mit mindestens einem, durch einen zugmomentübertragenden Freilauf geschalteten Getriebegang, wobei die Drehzahl der Motorwelle durch eine Veränderung einer Stellung eines Fahrpedals (FS) durch den Fahrer veränderbar ist.

Auf einfache und kostengünstige Weise kann der Fahrkomfort dadurch erhöht und/oder der Bauteilverschleiß dadurch verringert werden, dass wenn der mindestens eine freilaufgeschaltete Getriebegang aktiv ist, eine motorseitige Freilaufeingangsdrehzahl (U_{M},_{FE}) und eine freilaufausgangsseitige Freilaufausgangsdrehzahl (U_{FA}) des Freilaufs ermittelt werden, wobei wenn die ermittelte Freilaufausgangsdrehzahl größer als die ermittelte Freilaufeingangsdrehzahl ist und die Stellung des Fahrpedals unverändert beibehalten bleibt oder reduziert wird, der Motor mit einer Motorwellen-Soll-Drehzahl betrieben wird, welche knapp unterhalb der ermittelten Freilaufausgangsdrehzahl liegt.

## Beschreibung

Die Erfindung betrifft ein Verfahren zur Steuerung eines Antriebsstrangs eines Kraftfahrzeugs, insbesondere eine Hybridfahrzeugs, gemäß den Merkmalen des Oberbegriffes des Patentanspruches 1.

Antriebsstränge von Kraftfahrzeugen können insbesondere mindestens einen Motor, beispielsweise einen Verbrennungsmotor und/oder einen Elektromotor, und ein von dem Motor über eine Motorwelle antreibbares Getriebe aufweisen. Dabei kann die Drehzahl der Motorwelle durch eine Veränderung einer Stellung eines Fahrpedals durch den Fahrer veränderbar sein. Bei herkömmlichen rein verbrennungsmotorisch angetriebenen Kraftfahrzeugen weist der Antriebsstrang einen Verbrennungsmotor auf. Bei Elektrofahrzeugen weist der Antriebsstrang einen Elektromotor auf. Bei Hybridfahrzeugen weist der Antriebsstrand sowohl einen Verbrennungsmotor als auch einen Elektromotor auf und kann hybridisch und/oder rein verbrennungsmotorisch und/oder rein elektromotorisch angetrieben werden.

Aus der DE 10 2010 023 093 B4 ist ein Antriebsstrang für ein Kraftfahrzeug und ein Verfahren zu dessen Steuerung bekannt. Dabei umfasst der Antriebsstrang einen Verbrennungsmotor, einen Elektromotor und ein Getriebe. Zwischen dem Verbrennungsmotor und einer durch den Verbrennungsmotor angetriebenen Kraftfahrzeugachse ist dabei ein Freilauf angeordnet. Der Freilauf kann dabei im Leistungsfluss vor dem Getriebe angeordnet sein.

Aus der DE 102 21 701 A1 ist ein Verfahren zur Steuerung eines Kraftfahrzeugs mit einer automatisierten Kupplungsvorrichtung und einem ansteuerbaren Motor bekannt, in dem vor dem Schließen der Kupplung zur Beendigung eines Segelmodus eine Drehzahl einer Getriebeantriebswelle ermittelt und die Drehzahl des Motors so geregelt wird, dass die beiden Drehzahlen übereinstimmen beziehungsweise aneinander angeglichen werden.

Aus der DE 10 2012 212 230 A1 ist bekannt, ein Verfahren zur Überführung eines Kraftfahrzeugs von einem Segelbetrieb, in dem eine automatisierte Kupplung geöffnet ist, in einen Normalbetrieb, in dem die automatisierte Kupplung geschlossen wird, wenn aufgrund einer Betätigung eines Fahrpedals die Drehzahl eines Antriebs in etwa die Synchronisationsdrehzahl einer Eingangswelle eines Getriebes erreicht hat. Dabei wird während des Segelbetriebes und während des Schließens der Kupplung die vom Antrieb abgegebene Drehzahl, insbesondere auf die Synchrondrehzahl, begrenzt.

Die im Stand der Technik bekannten Verfahren sind jedoch noch nicht optimal ausgebildet. So kann es, wenn der Fahrer eines Kraftfahrzeugs mit einem Antriebsstrang mit einem Motor, mit einem von dem Motor antreibbaren Getriebe und mit einem Freilauf-geschalteten Getriebe in einer Situation mit einem offenen Freilauf mit einer hohen Drehzahldifferenz zwischen motorseitigem Freilaufeingangsseite und Freilaufausgangsseite das Fahrpedal betätigt beziehungsweise die Stellung des Fahrpedals erhöht und das Fahrzeug vom Schub in den Zug wechselt, zu einem heftigen Schlag und einem starken Ruck des Kraftfahrzeugs durch ein plötzliches Schließen des Freilaufs kommen. Dabei können hohe Drehzahldifferenzen zwischen der motorseitigen Freilaufeingangsseite und Freilaufausgangsseite beispielsweise dadurch erzeugt werden, dass der Motor ein Schubmoment stellt, welches das Getriebe aufgrund des lediglich zugmomentübertragenden Freilaufs nicht abfangen kann, und daher die Motordrehzahl schnell, beispielsweise bis auf eine Leerlaufdrehzahl des Motors, abfallen kann. Ein heftiges Schlagen und starkes Rucken des Kraftfahrzeugs beim Schließen des Freilaufs kann jedoch den Fahrkomfort beeinträchtigen und/oder zu einem erhöhten Bauteilverschleiß, beispielsweise des Freilaufs, führen.

Der Erfindung liegt daher die Aufgabe zu Grunde, das eingangs genannte Verfahren zur Steuerung eines Antriebsstrangs eines Kraftfahrzeugs, beispielsweise eines Hybridfahrzeugs, derart auszugestalten und weiterzubilden, dass dadurch der Fahrkomfort erhöht und/oder Bauteilverschleiß verringert ist.

Die der Erfindung zugrunde liegende Aufgabe wird durch ein Verfahren zur Steuerung eines Antriebsstrangs eines Kraftfahrzeugs, insbesondere eines Hybridfahrzeugs, mit den Merkmalen des Patentanspruches 1 gelöst.

Dabei umfasst der Antriebsstrang mindestens einen Motor, beispielsweise einen Verbrennungsmotor und/oder einen Elektromotor, ein von dem Motor über eine Motorwelle antreibbares Getriebe und mindestens einen zugmomentübertragenden freilaufgeschalteten Getriebegang. Dabei ist die Drehzahl der Motorwelle durch eine Veränderung einer Stellung eines Fahrpedals durch den Fahrer veränderbar.

Insbesondere wird dabei wenn der mindestens eine freilaufgeschaltete Getriebegang aktiv ist, eine motorwellenseitige Freilaufeingangsdrehzahl und eine freilaufausgangsseitige Freilaufausgangsdrehzahl des Freilaufs ermittelt. Mit dem Ausdruck "aktiv" ist insbesondere gemeint, dass der freilaufgeschaltete Getriebegang "eingelegt" ist, insbesondere also kein anderer Gang im Getriebe eingelegt ist, insbesondere also mit Hilfe von anderen Gängen keine Kraftübertragung im Getriebe möglich ist. Die Freilaufeingangsdrehzahl und die Freilaufausgangsdrehzahl können beispielsweise gemessen und/oder errechnet werden.

Dabei kann der mindestens eine freilaufgeschaltete Getriebegang beispielsweise dann aktiv sein, wenn der Fahrer des Fahrzeugs, zum Beispiel mittels eines automatisierten Handschaltgetriebes, beispielsweise auch als "Tiptronik" bezeichnet, den mindestens einen freilaufgeschalteten Getriebegang ausgewählt hat und/oder bei einem Doppelkupplungsgetriebe eine dem freilaufgeschalteten Getriebegang zugeordnete Getriebeeingangswelle durch eine Kupplung eingekuppelt ist.

Anhand der motorwellenseitigen Freilaufeingangsdrehzahl und der freilaufausgangsseitigen Freilaufausgangsdrehzahl, insbesondere anhand deren Freilauf-Drehzahldifferenz (Differenz zwischen der Freilaufeingangsdrehzahl und der Freilaufausgangsdrehzahl), kann der Status des Freilaufs ermittelt werden. Wenn die ermittelte Freilaufausgangsdrehzahl größer als die ermittelte Freilaufeingangsdrehzahl ist, bedeutet dies zum Beispiel, dass der, insbesondere lediglich, zugmomentübertragende Freilauf geöffnet ist und ein, insbesondere nicht über den Freilauf übertragbares, Schubmoment vorliegt. Aufgrund der konkreten Detektion über die Freilauf-Differenzdrehzahl kann vorteilhafterweise ein Schubmoment (Motorschub) erkannt werden, ohne dabei volatile Größen, wie Fahrbahnsteigung und/oder Kraftfahrzeugmasse, verwenden zu müssen. Das Verfahren ist daher auf eine Vielzahl von unterschiedlichen Fahrzeugtypen ohne Anpassung derartiger volatiler Größen übertragbar.

Insbesondere wird (dann) wenn die ermittelte Freilaufausgangsdrehzahl größer als die ermittelte Freilaufeingangsdrehzahl ist und die Stellung des Fahrpedals unverändert beibehalten bleibt oder reduziert wird, der Motor mit einer Motorwellen-Soll-Drehzahl betrieben, welche knapp unterhalb der ermittelten Freilaufausgangsdrehzahl liegt.

So kann die Drehzahl des Motors auf die Motor-Soll-Drehzahl geführt und eine hohe Freilauf-Drehzahldifferenz zwischen der Freilaufeingangsdrehzahl und der Freilaufausgangsdrehzahl vermieden und damit beim Lastwechsel vom Schub in den Zug eine unmittelbare Anbindung ermöglicht und zugleich ein plötzlich Schließen des Freilaufs mit einer hohen Freilauf-Differenzdrehzahl und damit ein heftiges Schlagen und/oder ein starkes Rucken des Kraftfahrzeugs vermieden werden. So kann wiederum der Fahrkomfort erhöht und/oder Bauteilverschleiß verringert werden.

Das Verfahren kann insbesondere auch bei Bergauffahrten, beispielsweise bei denen der Freilauf trotz eines Motorschubmomentes noch geschlossen bleiben kann, wenn die Hangabtriebskraft für einen stärker fallenden Motordrehzahlgradienten als das Motorschubmoment sorgt, und/oder bei Bergabfahrten, beispielsweise bei denen der Freilauf auch bei einem Motorzugmoment (positives Motormoment) öffnen kann, wenn die Hangabtriebskraft zu einem größeren positiven Drehzahlgradienten als das Motorzugmoment führt, funktionieren.

Unter einer knapp unterhalb der ermittelten Freilaufausgangsdrehzahl liegenden Drehzahl kann insbesondere eine Drehzahl verstanden werden, welche in einem Bereich von ≥ 90 % bis < 100 % der ermittelten Freilaufausgangsdrehzahl liegt.

In einer bevorzugten Ausgestaltung liegt die Motorwellen-Soll-Drehzahl > 0 bis ≤ 100 Upm (Upm = Umdrehungen pro Minute), beispielsweise ≥ 10 bis ≤ 90 Upm, zum Beispiel 50 Upm, unterhalb der ermittelten Freilaufausgangsdrehzahl.

Dadurch, dass der Motor bei einer Motordrehzahl betrieben wird, welche knapp, zum Beispiel 50 Upm, unterhalb der ermittelten Freilaufausgangsdrehzahl liegt, kann sichergestellt werden, dass einerseits nicht ungewollt Moment übertragen und andererseits der Freilauf auf jeden Fall offen gehalten wird.

In einer weiteren Ausgestaltung wird (dann), wenn die ermittelte Freilaufausgangsdrehzahl wieder gleich oder kleiner der ermittelten Freilaufeingangsdrehzahl wird und/oder die Stellung des Fahrpedals wieder erhöht wird, der Motor mit einer Motorwellen-Drehzahl betrieben, welche zur Stellung des Fahrpedals korrespondiert und insbesondere größer als die vorherige Motorwellen-Soll-Drehzahl ist. So kann der Freilauf ausgehend von der Motorwellen-Soll-Drehzahl mit einer geringen Freilauf-Drehzahldifferenz geschlossen und ein heftiges Schlagen und/oder ein starkes Rucken des Kraftfahrzeugs vermieden werden.

In einer weiteren Ausgestaltung werden die Freilaufeingangsdrehzahl, die Freilaufausgangsdrehzahl, deren Verhältnis zueinander und die Motorwellen-Soll-Drehzahl im Getriebe, insbesondere von einem Getriebesteuergerät des Getriebes, ermittelt. Das Verfahren kann so in das Getriebe, beispielsweise ein Getriebesteuergerät, implementiert werden, wobei der Motor beziehungsweise ein Motorsteuergerät des Motors entsprechend unverändert beibehalten werden kann. Dies kann für Plugin-Hybridfahrzeuge von besonderem Vorteil sein.

In einer weiteren Ausgestaltung wird die Motorwellen-Soll-Drehzahl vom Getriebe, insbesondere vom Getriebesteuergerät des Getriebes, an den Motor ausgegeben, insbesondere gesendet. Wie bereits erläutert kann so das Verfahren auf einfache Weise in das Getriebe, insbesondere in das Getriebesteuergerät, implementiert werden, insbesondere ohne dabei den Motor beziehungsweise das Motorsteuergerät zu adaptieren.

Durch das Ausgeben, insbesondere Senden, der Motorwellen-Soll-Drehzahl kann vorteilhafterweise zusätzlich dem Motor, beispielsweise einem Motorsteuergerät (MSG) des Motors, indirekt mitgeteilt werden, dass kein Schubmoment über den mindestens einen freilaufgeschalteten Getriebegang übertragbar ist.

In einer weiteren Ausgestaltung wird die Motorwellen-Soll-Drehzahl vom Getriebe, insbesondere vom Getriebesteuergerät des Getriebes, an ein Motorsteuergerät des Motors ausgegeben, insbesondere gesendet.

In einer weiteren Ausgestaltung ist der mindestens eine freilaufgeschaltete Getriebegang der erste Vorwärtsgang des Getriebes. Durch den Einsatz eines Freilaufs für die Schaltung des Getriebegangs, insbesondere des ersten Vorwärtsgangs des Getriebes, kann eine Gangstelleraktuatorik eingespart und/oder Bauteilverschleiß reduziert werden.

In einer weiteren Ausgestaltung ist das Getriebe ein, insbesondere als automatisiertes Handschaltgetriebe ausgeführtes, Mehrganggetriebe, insbesondere ein Stufengetriebe und/oder Doppelkupplungsgetriebe, beispielsweise mit mindestens einem weiteren Vorwärtsgang.

In einer weiteren Ausgestaltung ist das Verfahren zur Steuerung eines Antriebsstrangs eines Hybridfahrzeugs, beispielsweise eines Plugin-Hybridfahrzeugs, mit einem Verbrennungsmotor und mit mindestens einem Elektromotor, insbesondere mit mindestens einer elektromotorisch und rekuperatorisch betreibbaren Elektromaschine, ausgelegt.

Die eingangs genannten Nachteile sind daher vermieden und entsprechende Vorteile sind erzielt.

Es gibt nun eine Vielzahl von Möglichkeiten, das erfindungsgemäße Verfahren in vorteilhafter Art und Weise auszugestalten und weiterzubilden. Hierfür darf zunächst auf die dem Patentanspruch 1 nachgeordneten Patentansprüche verwiesen werden. Im Folgenden werden einige bevorzugte Ausgestaltung des erfindungsgemäßen Verfahrens anhand der Zeichnung und der dazugehörigen Beschreibung näher erläutert. In der Zeichnung zeigt:

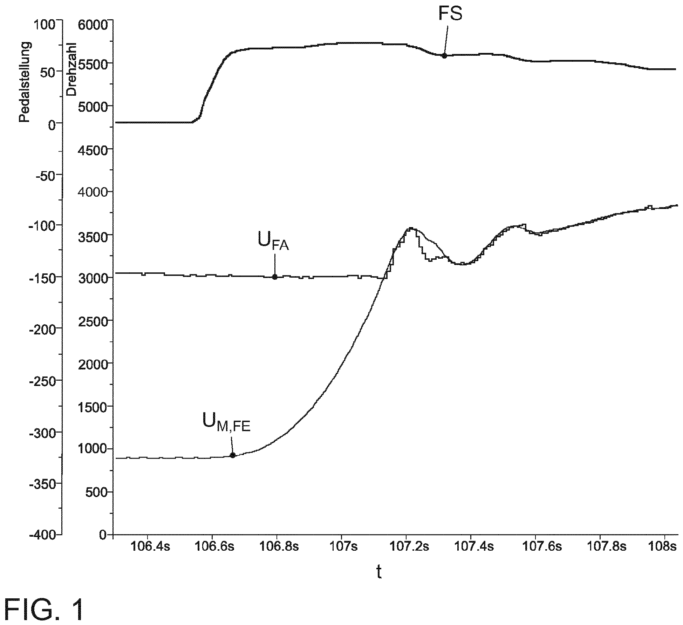

- Fig. 1: in einem schematischen Graphen einen Verlauf einer Fahrpedalstellung, einer Motorwellen-Drehzahl und einer Freilaufausgangsdrehzahl bei einem Kraftfahrzeugantriebsstrang mit einem Motor, mit einem von dem Motor über eine Motorwelle antreibbaren Getriebe und mit mindestens einem zugmomentübertragenden freilaufgeschalteten Getriebegang, ohne das erfindungsgemäße Verfahren; und

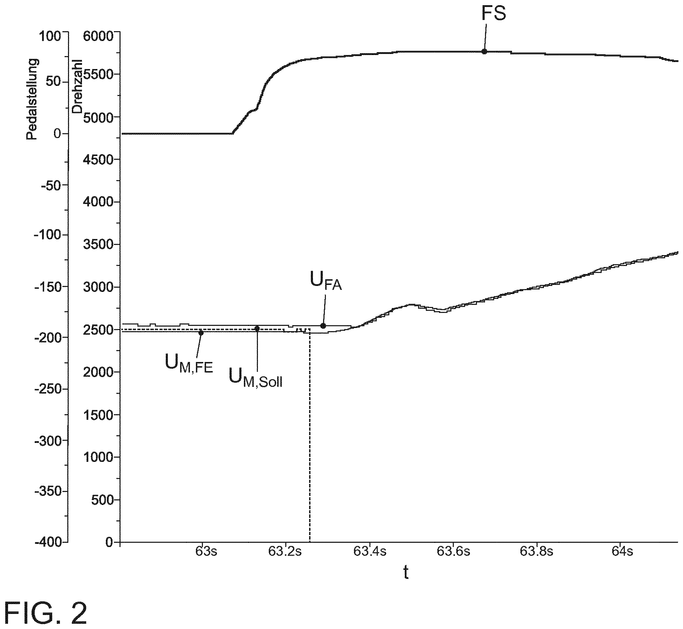

- Fig. 2: in einem schematischen Graphen einen Verlauf einer Fahrpedalstellung, einer Motorwellen-Drehzahl und einer Freilaufausgangsdrehzahl bei einem Kraftfahrzeugantriebsstrang mit einem Motor, mit einem von dem Motor über eine Motorwelle antreibbaren Getriebe und mit mindestens einem zugmomentübertragenden freilaufgeschalteten Getriebegang, mit dem erfindungsgemäßen Verfahren.

Fig. 1 zeigt das Ergebnis einer Messung an einem ohne das erfindungsgemäße Verfahren betriebenen Antriebsstrang mit einem Motor, mit einem von dem Motor über eine Motorwelle antreibbaren Getriebe und mit mindestens einem zugmomentübertragenden freilaufgeschalteten Getriebegang.

Fig. 1 veranschaulicht, dass wenn der Freilauf in einem Schubbetrieb des Kraftfahrzeugs geöffnet ist, die Motorwellen-Drehzahl U_{M,FE}, welche zugleich insbesondere auch die Freilaufeingangsdrehzahl sein kann, deutlich niedriger als die Freilaufausgangsdrehzahl U_{FA} ist und gegebenenfalls bis auf eine Leerlaufdrehzahl des Motors absinken kann. Wenn der Fahrer in diesem Zustand das Fahrpedal betätigt beziehungsweise die Stellung des Fahrpedals erhöht, läuft die Motorwellen-Drehzahl U_{M,FE} nach einer gewissen Verzögerung in der Gasannahme mit viel Moment und einer hohen Dynamik hoch und der Freilauf schließt schlagartig, was zu einem heftigen Schlag und/oder einem starken Ruck im Kraftfahrzeug führen kann.

Fig. 2 zeigt das Ergebnis einer Messung an einem mit dem erfindungsgemäßen Verfahren betriebenen Antriebsstrang mit einem Motor, mit einem von dem Motor über eine Motorwelle antreibbaren Getriebe und mit mindestens einem zugmomentübertragenden freilaufgeschalteten Getriebegang.

Fig. 2 veranschaulicht, dass wenn der Freilauf in einem Schubbetrieb des Kraftfahrzeugs geöffnet ist, die Motorwellen-Drehzahl U_{M,FE}, welche zugleich insbesondere auch die Freilaufeingangsdrehzahl sein kann, bei einer Motorwellen-Soll-Drehzahl U_{M,Soll} gehalten wird, welche knapp unterhalb der Freilaufausgangsdrehzahl U_{FA} liegt. Wenn der Fahrer in diesem Zustand das Fahrpedal betätigt und insbesondere die Stellung des Fahrpedals erhöht, die Motorwellen-Drehzahl U_{M,FE} nach einer gewissen Verzögerung in der Gasannahme lediglich von der knapp unterhalb der Freilaufausgangsdrehzahl liegenden Motorwellen-Soll-Drehzahl U_{M,Soll} auf die Freilaufausgangsdrehzahl U_{FA} angehoben wird und der Freilauf vergleichsweise sanft schließt und insbesondere kein heftiger Schlag und/oder kein starkes Rucken im Kraftfahrzeug mehr auftritt.

Fig. 2 zeigt zudem, dass durch das erfindungsgemäße Verfahren die Anbindung deutlich schneller erfolgen kann.

### Bezugszeichenliste

- FS: Fahrpedalstellung
- U_{FA}: Freilaufausgangsdrehzahl
- U_{M,FE}: Motorwellen-Drehzahl/Freilaufeingangsdrehzahl
- U_{M,Soll}: Motorwellen-Soll-Drehzahl

## Patentansprüche

1. Verfahren zur Steuerung eines Antriebsstrangs eines Kraftfahrzeugs, insbesondere eines Hybridfahrzeugs, mit mindestens einem Motor, mit einem von dem Motor über eine Motorwelle antreibbaren Getriebe und mit mindestens einem zugmomentübertragenden freilaufgeschalteten Getriebegang, wobei die Drehzahl der Motorwelle durch eine Veränderung einer Stellung eines Fahrpedals (FS) durch den Fahrer veränderbar ist, **dadurch gekennzeichnet, dass** wenn der mindestens eine freilaufgeschaltete Getriebegang aktiv ist, eine motorseitige Freilaufeingangsdrehzahl (U_{M,FE}) und eine freilaufausgangsseitige Freilaufausgangsdrehzahl (U_{FA}) des Freilaufs ermittelt werden, wobei wenn die ermittelte Freilaufausgangsdrehzahl (U_{FA}) größer als die ermittelte Freilaufeingangsdrehzahl (U_{M,FE}) ist und die Stellung des Fahrpedals (FS) unverändert beibehalten bleibt oder reduziert wird, der Motor mit einer Motorwellen-Soll-Drehzahl (U_{M,Soll}) betrieben wird, welche knapp unterhalb der ermittelten Freilaufausgangsdrehzahl (U_{FA}) liegt.

2. Verfahren nach Anspruch 1, **dadurch gekennzeichnet, dass** die Motorwellen-Soll-Drehzahl (U_{M,Soll}) > 0 bis ≤ 100 Upm, insbesondere ≥ 10 bis ≤ 90 Upm, unterhalb der ermittelten Freilaufausgangsdrehzahl (U_{FA}) liegt.

3. Verfahren nach Anspruch 1 oder 2, **dadurch gekennzeichnet, dass** wenn die ermittelte Freilaufausgangsdrehzahl (U_{FA}) wieder gleich oder kleiner der ermittelten Freilaufeingangsdrehzahl (U_{M,FE}) wird und/oder die Stellung des Fahrpedals (FS) erhöht wird, der Motor mit einer Motorwellen-Drehzahl (U_{M,FE}) betrieben wird, welche zur Stellung des Fahrpedals (FS) korrespondiert und insbesondere größer als die vorherige Motorwellen-Soll-Drehzahl (U_{M,Soll}) ist.

4. Verfahren nach einem der vorstehenden Ansprüche, **dadurch gekennzeichnet, dass** die Freilaufeingangsdrehzahl (U_{M,FE}), die Freilaufausgangsdrehzahl (U_{FA}), deren Verhältnis zueinander und/oder die Motorwellen-Soll-Drehzahl (U_{M,Soll}) im Getriebe, insbesondere von einem Getriebesteuergerät des Getriebes, ermittelt werden.

5. Verfahren nach einem der vorstehenden Ansprüche, **dadurch gekennzeichnet, dass** die Motorwellen-Soll-Drehzahl (U_{M,Soll}) vom Getriebe, insbesondere vom Getriebesteuergerät des Getriebes, an den Motor ausgegeben, insbesondere gesendet, wird.

6. Verfahren nach einem der vorstehenden Ansprüche, **dadurch gekennzeichnet, dass** die Motorwellen-Soll-Drehzahl (U_{M,Soll}) vom Getriebe, insbesondere vom Getriebesteuergerät des Getriebes, an ein Motorsteuergerät des Motors ausgegeben, insbesondere gesendet, wird.

7. Verfahren nach einem der vorstehenden Ansprüche, **dadurch gekennzeichnet, dass** die Freilaufeingangsdrehzahl (U_{M,FE}) und die Freilaufausgangsdrehzahl (U_{FA}) gemessen und/oder errechnet werden.

8. Verfahren nach einem der vorstehenden Ansprüche, **dadurch gekennzeichnet, dass** der mindestens eine freilaufgeschaltete Getriebegang der erste Vorwärtsgang des Getriebes ist.

9. Verfahren nach einem der vorstehenden Ansprüche, **dadurch gekennzeichnet, dass** das Getriebe ein, insbesondere als automatisiertes Handschaltgetriebe ausgeführtes, Mehrganggetriebe, insbesondere ein Doppelkupplungsgetriebe und/oder Stufengetriebe, mit mindestens einem weiteren Vorwärtsgang ist.

10. Verfahren nach einem der vorstehenden Ansprüche, **dadurch gekennzeichnet, dass** das Verfahren zur Steuerung eines Antriebsstrangs eines Hybridfahrzeugs mit einem Verbrennungsmotor und mit mindestens einem Elektromotor, insbesondere mit mindestens einer elektromotorisch und/oder rekuperatorisch betreibbaren Elektromaschine, ausgelegt ist.
